# EUROPÄISCHE PATENTSCHRIFT

(11) **EP 3 564 085 B1**
(45) Veröffentlichungstag und Bekanntmachung des Hinweises auf die Patenterteilung: **08.05.2024**
(21) Anmeldenummer: 19162473.3
(22) Anmeldetag: 13.03.2019
(51) Int. Cl.: B60K 35/10, B60W 30/18, B60W 50/08

(54) **VERFAHREN UND SYSTEM ZUM EINSTELLEN EINES FAHRBETRIEBS EINES FAHRZEUGS**
METHOD AND SYSTEM FOR ADJUSTING THE DRIVING OF A VEHICLE
PROCÉDÉ ET SYSTÈME DE RÉGLAGE D'UN MODE DE ROULAGE D'UN VÉHICULE

(30) Priorität: 04.04.2018 DE 102018205039
(43) Veröffentlichungstag der Anmeldung: 06.11.2019
(73) Patentinhaber: AUDI AG, 85045 Ingolstadt (DE)
(72) Erfinder: Ritter, Bernd, 85113 Böhmfeld (DE)

(56) Entgegenhaltungen:
- DE-A1-102010 004 846
- DE-A1-102011 011 345
- DE-A1-102014 207 065
- US-A1- 2016 052 519

## Beschreibung

Die Erfindung betrifft ein Verfahren und ein System zum Einstellen eines Fahrbetriebs eines Fahrzeugs.

Ein Kraftfahrzeug, das mit mindestens einer Elektromaschine angetrieben wird, kann in unterschiedlichen Fahrbetrieben angetrieben werden, wobei ein jeweiliger Fahrbetrieb von einem Insassen des Kraftfahrzeugs ausgewählt und eingestellt wird.

Eine gängige Rekuperationsbedienung beinhaltet zwei mögliche Varianten, bei denen jeweils zwischen einem Rekuperationsbetrieb und einem Segelbetrieb geschaltet wird.

Bei einer ersten Variante wird direkt zwischen dem Segelbetrieb und einem maximalen Rekuperationsbetrieb hin und her geschaltet.

Als Beispiel kann hier die Rekuperationsbedienung des elektrisch betriebenen Up^{®} der Marke Volkswagen^{®}, im Folgenden eUp^{®} aufgeführt werden. Hierbei wird eine tippende Wählhebelbedienung nach hinten verwendet. Im Ausgangszustand in der Fahrstufe "D" befindet sich der eUp^{®} im sogenannten Segelbetrieb, d. h. bei Verlassen des Fahrpedals rollt das Fahrzeug. Durch Tippen des Wählhebels nach hinten wird in den maximalen Rekuperationsbetrieb "B" umgeschaltet, d. h. das Fahrzeug beginnt stark zu verzögern, ohne mechanisch zu bremsen, da der E-Motor von Leerlauf (Segeln) auf Generatorbetrieb (Rekuperieren) umschaltet und die kinetische Energie des Fahrzeugs in elektrische Energie umwandelt und diese in der Fahrzeugbatterie speichert. Das Fahrzeug rekuperiert mit der maximalen Rekuperationsstufe. Bei einer weiteren tippenden Bedienung des Wählhebels nach hinten wird wieder der Segelbetrieb "D" eingestellt.

Bei einer zweiten Variante sind mehrere Stufen für den Rekuperationsbetrieb vorgesehen, wobei einerseits eine schrittweise Erhöhung einer Stufe des Rekuperationsbetriebs ausgehend von dem Segelbetrieb sowie eine schrittweise Verringerung der Stufen des Rekuperationsbetriebs hin zu dem Segelbetrieb möglich ist.

Als Beispiel kann auch hier die Rekuperationsbedienung des elektrisch betriebenen eUp^{®} aufgeführt werden. Dabei wird ebenfalls eine tippende Wählhebelbedienung nach links und rechts durchgeführt. Im Ausgangszustand in der Fahrstufe "D" befindet sich der eUp^{®} im Segelbetrieb. Ausgehend hiervon wird bei einer ersten Bedienung des Wählhebels nach links eine erste Stufe für den Rekuperationsbetrieb eingestellt, d. h. das Fahrzeug beginnt leicht zu verzögern. Bei einer tippenden Wählhebelbedienung nach links wird eine zweite Stufe für den Rekuperationsbetrieb eingestellt, d. h. das Fahrzeug erhöht die Verzögerung in die zweite von insgesamt vier Stufen. Weiterhin ist es möglich, durch Bedienen des Wählhebels nach links eine dritte Stufe für den Rekuperationsbetrieb einzustellen. Sofern ausgehend hiervon der Wählhebel nach rechts getippt wird, wird wieder die zweite Stufe für den Rekuperationsbetrieb eingestellt. Durch weiteres Tippen nach rechts wird die erste Stufe für den Rekuperationsbetrieb eingestellt. Danach ist es möglich, wieder den Segelbetrieb einzustellen, wenn der Wählhebel durch nochmaliges Tippen nach rechts bedient wird.

Die Druckschrift DE 10 2010 004 846 A1 zeigt ein Verfahren und eine Steuervorrichtung zur Rekuperation für ein Kraftfahrzeug.

Ein Verfahren zum Aktivieren eines Segelmodus in einem Kraftfahrzeug ist aus der Druckschrift DE 10 2012 222 348 A1 bekannt.

Die Druckschrift DE 10 2014 207 065 A1 beschreibt ein Verfahren zum Durchführen einer benutzerdefinierten Rekuperation.

Die Druckschrift DE 10 2011 011 345 A1 beschreibt ein Verfahren zur Steuerung eines Rekuperationsverhaltens in einem Kraftfahrzeug. Dabei sind an einem Lenkrad des Kraftfahrzeugs ein erstes Bedienelement und ein zweites Bedienelement angeordnet, wobei mit dem ersten Bedienelement ein Grundwert eines Rekuperationsmoments eingestellt wird. Mit dem zweiten Bedienelement wird ein vom Grundwert abweichender Zwischenwert für das Rekuperationsmoment eingestellt.

Vor diesem Hintergrund war es eine Aufgabe, einen Fahrbetrieb eines Fahrzeugs mit einem Bedienelement effektiv zu steuern.

Erfindungsgemäß wird diese Aufgabe durch ein Verfahren und ein System mit den Merkmalen der unabhängigen Patentansprüche gelöst. Ausführungsformen des Verfahrens und des Systems gehen aus den abhängigen Patentansprüchen hervor.

Das erfindungsgemäße Verfahren ist zum Einstellen eines Fahrbetriebs eines Fahrzeugs, das mit mindestens einer Elektromaschine angetrieben wird, vorgesehen, wobei für den Fahrbetrieb mehrere, nämlich n größer gleich zwei (n ≥ 2) Stufen eines Rekuperationsbetriebs und ein Segelbetrieb vorgesehen werden. Mit einem Bedienelement wird entweder ein erster Bedienschritt oder ein zweiter Bedienschritt durchgeführt. Dabei wird bei jeweils einmaligem Durchführen des ersten Bedienschritts mit dem Bedienelement eine Stufe des Rekuperationsbetriebs erhöht, wobei durch mehrmaliges Durchführen des ersten Bedienschritts mit dem Bedienelement eine Stufe des Rekuperationsbetriebs eingestellt wird, die üblicherweise höher als eine niedrigste Stufe des Rekuperationsbetriebs ist. Außerdem wird bei Durchführen des zweiten Bedienschritts mit dem Bedienelement ausgehend von der jeweils eingestellten Stufe, insbesondere höheren Stufe, des Rekuperationsbetriebs der Segelbetrieb direkt eingestellt.

In Ausgestaltung wird bspw. beim Loslassen oder durch Loslassen eines Fahrpedals des Fahrzeugs bzw. ausgehend von dem Loslassen des Fahrpedals der Segelbetrieb als Fahrbetrieb bzw. Fahrmodus eingestellt, wobei das Fahrzeug im Segelbetrieb ohne Verzögerungsmoment aus dem Antriebsstrang rollt. Im Segelbetrieb wird mit dem Bedienelement der erste Bedienschritt oder der zweite Bedienschritt durchgeführt. Dabei wird bei einem erstmaligen Durchführen des ersten Bedienschritts mit dem Bedienelement ausgehend von dem Segelbetrieb oder einem Fahrbetrieb, bei dem das Fahrzeug von mindestens einem Motor angetrieben wird, auf die erste Stufe des Rekuperationsbetriebs umgeschaltet, d. h. das Fahrzeug beginnt leicht zu verzögern, ohne dass die Bremse betätigt wird. Durch ein nochmaliges oder nachfolgend mehrmaliges Durchführen des ersten Bedienschritts mit dem Bedienelement wird die jeweils eingestellte Stufe des Rekuperationsbetriebs jeweils um mindestens eine weitere Stufe erhöht. Außerdem wird bei Durchführen des zweiten Bedienschritts mit dem Bedienelement ausgehend von jedweder aktiven Stufe des Rekuperationsbetriebs direkt wieder der Segelbetrieb eingestellt, d. h. das Fahrzeug beendet eine Verzögerung, die aus einer jeweiligen bzw. k-ten Stufe des Rekuperationsbetriebs resultiert, wobei die jeweilige Stufe zuvor durch k-maliges Durchführen des ersten Bedienschritts aktiviert wurde. Somit wechselt das Fahrzeug durch Durchführen des zweiten Bedienschritts aus dem Rekuperationsbetrieb direkt in den Segelbetrieb. Das Fahrzeug ist als Kraftfahrzeug ausgebildet und/oder zu bezeichnen und weist mindestens einen als Elektromotor ausgebildeten Motor zum Antreiben des Fahrzeugs auf. Optional kann das Fahrzeug zusätzlich einen als Verbrennungsmotor ausgebildeten Motor aufweisen.

Bei dem Verfahren wird mit dem Bedienelement zwischen der jeweils eingestellten höheren Stufe für den Rekuperationsbetrieb als Fahrbetrieb und dem Segelbetrieb als Fahrbetrieb gewählt. Dabei ist es möglich, dass mit dem Bedienelement sowohl der erste als auch der zweite Bedienschritt durchführbar ist, wobei diese beiden Bedienschritte alternativ durchgeführt werden. Dabei wird das Bedienelement bedient und für das Fahrzeug, insbesondere die mindestens eine Elektromaschine, zunächst die höhere Stufe für den Rekuperationsbetrieb ausgewählt und eingestellt. Außerdem wird das Bedienelement danach erneut bedient und dann, ausgehend von der ausgewählten und eingestellten höheren Stufe für den Rekuperationsbetrieb direkt der Segelbetrieb ausgewählt und eingestellt. Somit ist es möglich, aus einer beliebigen Stufe des Rekuperationsbetriebs direkt in den Segelbetrieb umzuschalten. Die höhere Stufe des Rekuperationsbetriebs entspricht mindestens einer zweiten Stufe und ist höher als eine erste, niedrigste Stufe des Rekuperationsbetriebs.

Falls bspw. eine k-te Stufe von insgesamt n Stufen des Rekuperationsbetriebs eingestellt werden soll, wird ausgehend von einem normalen Fahrbetrieb oder dem Segelbetrieb mit dem Bedienelement k-mal nacheinander der erste Bedienschritt durchgeführt. Unabhängig davon, wie oft der erste Bedienschritt nacheinander durchgeführt wurde, wird bereits durch lediglich einmaliges Durchführen des zweiten Bedienschritts der Segelbetrieb eingestellt.

In der Regel wird bei Durchführung des ersten Bedienschritts eine erste Bewegung und bei Durchführung des zweiten Bedienschritts eine zweite Bewegung durchgeführt, wobei diese beiden Bewegungen unterschiedlich sind, bspw. entgegengesetzt orientiert sind.

In der Regel sind und/oder werden für den Rekuperationsbetrieb bzw. für eine Rekuperation mehrere Stufen vorgesehen.

In Ausgestaltung wird mit dem Bedienelement ausgehend aus jeder aktuell eingestellten und/oder ausgewählten Stufe des Rekuperationsbetriebs, bspw. auch ausgehend von der niedrigsten oder höchsten Stufe, der Segelbetrieb ausgewählt und direkt eingestellt.

Im Rahmen des Verfahrens wird ein Bedienelement verwendet, das einen Auswahlschalter bzw. Auswahlknopf aufweist, mit dem der erste Bedienschritt und der zweite Bedienschritt durchgeführt wird, wobei unter und/oder durch Durchführung des ersten Bedienschritts die Stufe für den Rekuperationsbetrieb ausgewählt wird, bspw. von einer Stufe zur nächst höheren, und wobei unter und/oder durch Durchführung des zweiten Bedienschritts der Segelbetrieb ausgewählt wird. Dabei wird der erste Bedienschritt mit der ersten Bewegung des Auswahlschalters durchgeführt. Der zweite Bedienschritt wird mit der zweiten Bewegung des Auswahlschalters durchgeführt.

Bei dem Verfahren wird ein Bedienelement verwendet, das nur einen Auswahlschalter bzw. Auswahlknopf aufweist, mit dem die mit dem ersten Bedienschritt verbundene erste Bewegung und die mit dem zweiten Bedienschritt verbundene zweite Bewegung durchgeführt wird, wobei diese beiden Bewegungen einander entgegengesetzt bzw. zueinander disjunkt sind, wobei unter Durchführung der ersten Bewegung die Stufe für den Rekuperationsbetrieb ausgewählt, bspw. erhöht, wird und wobei unter und/oder durch Durchführung der zweiten Bewegung der Segelbetrieb ausgewählt wird.

Außerhalb des Schutzumfangs der Ansprüche kann auch ein Bedienelement verwendet werden, das zwei Auswahlschalter bzw. Auswahlknöpfe aufweist, wobei mit einem ersten Auswahlschalter die mit dem ersten Bedienschritt verbundene erste Bewegung und mit einem zweiten Auswahlschalter die mit dem zweiten Bedienschritt verbundene zweite Bewegung durchgeführt wird, wobei diese beiden Bewegungen in möglicher Ausgestaltung einander entgegengesetzt sind, wobei durch Bedienen des ersten Auswahlschalters unter Durchführung der ersten Bewegung die Stufe für den Rekuperationsbetrieb ausgewählt, bspw. erhöht, wird und wobei durch Bedienen des zweiten Auswahlschalters unter und/oder durch Durchführung der zweiten Bewegung der Segelbetrieb ausgewählt wird.

In Ausgestaltung wird das Fahrzeug durch Einstellen und/oder Auswählen des Segelbetriebs ausgehend von der aktuell bzw. zunächst eingestellten und/oder ausgewählten Stufe des Rekuperationsbetriebs beschleunigt.

Bei dem Verfahren wird die durch Einstellen und/oder Auswählen des Segelbetriebs ausgehend von der aktuell bzw. zunächst eingestellten und/oder ausgewählten Stufe des Rekuperationsbetriebs, resultierende negative Beschleunigung des Fahrzeugs auf eine Null-Verzögerung durch den Antriebsstrang reduziert. Diese Änderung bzw. ein entsprechender Deltasprung der negativen Beschleunigung des Fahrzeugs wird von Insassen des Fahrzeugs aufgrund einer Trägheit ihrer Masse als Beschleunigung wahrgenommen.

Hierbei ist es auch möglich, dass die mindestens eine Elektromaschine in der zunächst eingestellten und/oder ausgewählten Stufe des Rekuperationsbetriebs als Generator betrieben wird. Die mindestens eine Elektromaschine wird in dem Segelbetrieb ausgeschaltet und/oder von einem Antriebsstrang des Fahrzeugs getrennt.

Das erfindungsgemäße System ist zum Einstellen eines Fahrbetriebs eines Fahrzeugs ausgebildet, das mit mindestens einer Elektromaschine angetrieben wird, wobei für den Fahrbetrieb mehrere Stufen eines Rekuperationsbetriebs und ein Segelbetrieb vorgesehen sind. Das System weist ein Bedienelement zum Durchführen eines ersten Bedienschritts oder eines zweiten zu dem ersten Bedienschritt alternativen Bedienschritts auf. Dabei wird bei jeweils einmaligem Durchführen des ersten Bedienschritts mit dem Bedienelement eine Stufe des Rekuperationsbetriebs erhöht. Durch mehrmaliges, d. h. mindestens zweimaliges Durchführen des ersten Bedienschritts mit dem Bedienelement wird eine Stufe des Rekuperationsbetriebs eingestellt, die höher als eine niedrigste Stufe des Rekuperationsbetriebs ist. Dagegen wird bei Durchführen des zweiten Bedienschritts mit dem Bedienelement ausgehend von der eingestellten höheren Stufe des Rekuperationsbetriebs der Segelbetrieb direkt eingestellt.

Das Bedienelement ist dazu ausgelegt bzw. ausgebildet, bei entsprechender Bedienung zwischen mindestens einer Stufe für den Rekuperationsbetrieb als Fahrbetrieb und dem Segelbetrieb als Fahrbetrieb umzuschalten. Dabei ist es denkbar, für das Fahrzeug, insbesondere die mindestens eine Elektromaschine, durch Bedienen des Bedienelements zunächst eine höhere Stufe der mindestens einen Stufe für den Rekuperationsbetrieb auszuwählen bzw. auswählbar und einzustellen bzw. einstellbar ist. Durch erneutes Bedienen des Bedienelements ist es möglich, dass dann ausgehend von der jeweils ausgewählten und eingestellten Stufe für den Rekuperationsbetrieb direkt der Segelbetrieb ausgewählt und eingestellt wird, auszuwählen bzw. auswählbar ist und einzustellen bzw. einstellbar ist.

Das Bedienelement weist einen Auswahlschalter bzw. Auswahlknopf auf, mit dem der erste Bedienschritt und der zweite Bedienschritt durchführbar bzw. durchführen ist und/oder durchgeführt wird, wobei unter und/oder durch Durchführung des ersten Bedienschritts, der mit einer ersten Bewegung verbunden bzw. durch diese definiert ist, mit dem Auswahlschalter die Stufe für den Rekuperationsbetrieb ausgewählt wird, und wobei unter und/oder durch Durchführung des zweiten Bedienschritts, der mit einer zweiten zu der ersten Bewegung unterschiedlichen Bewegung verbunden bzw. durch diese definiert ist, mit dem Auswahlschalter der Segelbetrieb auszuwählen bzw. auswählbar ist und/oder ausgewählt wird.

Das Bedienelement weist nur einen Auswahlschalter bzw. Auswahlknopf auf, mit dem die mit dem ersten Bedienschritt verbundene erste Bewegung und die mit dem zweiten Bedienschritt verbundene zweite Bewegung durchzuführen bzw. durchführbar ist und/oder durchgeführt wird, wobei unter Durchführung der ersten Bewegung die Stufe für den Rekuperationsbetrieb auswählbar bzw. auszuwählen ist und/oder ausgewählt wird, und wobei unter und/oder durch Durchführung der zweiten Bewegung der Segelbetrieb auszuwählen bzw. auswählbar ist und/oder ausgewählt wird.

Außerhalb des Schutzumfangs der Ansprüche ist es auch möglich, dass das Bedienelement zwei Auswahlschalter bzw.

Auswahlknöpfe, d. h. einen ersten Auswahlschalter und einen zweiten zusätzlichen Auswahlschalter aufweist, wobei mit dem ersten Auswahlschalter die mit dem ersten Bedienschritt verbundene erste Bewegung und mit dem zweiten Auswahlschalter die mit dem zweiten Bedienschritt verbundene zweite Bewegung durchzuführen bzw. durchführbar ist und/oder durchgeführt wird. Durch Bedienen des ersten Auswahlschalters wird unter Durchführung der ersten Bewegung die Stufe für den Rekuperationsbetrieb ausgewählt. Durch Bedienen des zweiten Auswahlschalters wird der Segelbetrieb unter und/oder durch Durchführung der zweiten Bewegung ausgewählt.

Die beiden Bewegungen, entsprechend der beiden durchführbaren Bedienschritte, sind bei Verwendung nur eines Auswahlschalters für die erste und die zweite Bewegung unterschiedlich, bspw. einander entgegengesetzt. Dabei kann die erste Bewegung nach rechts und die zweite nach links orientiert sein oder umgekehrt. Weiterhin kann die erste Bewegung nach oben und die zweite nach unten orientiert sein oder umgekehrt.

Hierbei ist es möglich, dass ein Auswahlschalter als Schiebeknopf (Shifter) ausgebildet ist, oder dass nicht erfindungsgemäße zwei Auswahlschalter als Tasten einer Lenkradwippe ausgebildet sind. Als Bedienelement kann eine in dem Fahrzeug ohnehin installierte Einrichtung, bspw. ein Lenkrad, verwendet werden.

Das vorgestellte Verfahren ist für ein als Elektrotraktionsfahrzeug ausgebildetes Fahrzeug vorgesehen, wobei mit dem Verfahren für das Fahrzeug eine Rekuperationsbedienung durchgeführt wird. Dabei ist das Fahrzeug bspw. als Hybridfahrzeug, Elektrofahrzeug oder Brennstoffzellenfahrzeug ausgebildet (PHEV, BEV). Dabei ist jeweils vorgesehen, dass der mindestens einen Elektromaschine des Fahrzeugs ausgehend von einer elektrischen Energiequelle, bspw. einer Batterie und/oder einer Brennstoffzelle, elektrische Energie bereitgestellt und von der mindestens einen Elektromaschine in mechanische Energie zum Antreiben bzw. Fortbewegen des Fahrzeugs gewandelt wird. Dabei wird die mindestens eine Elektromaschine als Motor betrieben. Umgekehrt ist es auch möglich, dass die mindestens eine Elektromaschine mechanische Energie in elektrische Energie umwandelt, die wiederum in einem elektrischen Energiespeicher und somit in einer Batterie des Fahrzeugs gespeichert wird. In diesem Fall wird die mindestens eine Elektromaschine als Generator betrieben, wobei der Rekuperationsbetrieb bzw. die Rekuperation durchgeführt wird.

Üblicherweise ist der Segelbetrieb für das Fahrzeug als möglicher Fahrbetrieb dadurch definiert, dass ein Fahrer des Fahrzeugs seinen Fuß von einem Fahrpedal nimmt und das Fahrzeug ohne Rekuperation rollt. Bei einem Rekuperationsbetrieb wird der Fuß ebenfalls vom Fahrpedal genommen, wobei das Fahrzeug entsprechend einer jeweils eingestellten Stufe für den Rekuperationsbetrieb, insbesondere einer maximalen Rekuperationsstufe (One-Pedal-Feeling) verzögert wird. Dabei hängt ein Ausmaß einer Verzögerung des Fahrzeugs wiederum von der jeweils eingestellten Stufe für den Rekuperationsbetrieb ab.

Mit dem Verfahren ist es möglich, unabhängig davon, welche Stufe des Rekuperationsbetriebs gerade für das Fahrzeug eingestellt ist, mit dem Bedienelement unter Durchführung des zweiten Bedienschritts und der entsprechenden zweiten Bewegung wieder den Segelbetrieb einzustellen, bei dem das Fahrzeug ohne Rekuperation rollt. Dabei weist das Bedienelement in Ausgestaltung außerhalb des Schutzumfangs der Ansprüche zwei Auswahlschalter bzw. Auswahlknöpfe auf, wobei jeder Auswahlschalter als Lenkradwippe ausgebildet ist und in diesem Fall das Lenkrad mit seinen Lenkradwippen als Bedienelement verwendet wird.

Weiterhin in Ausgestaltung außerhalb des Schutzumfangs der Ansprüche wird bspw. eine linke Lenkradwippe bzw. linke Taste des Lenkrads als Auswahlschalter zum Einstellen einer Stufe für den Rekuperationsbetrieb und eine rechte Lenkradwippe bzw. eine rechte Taste des Lenkrads als zweiter Auswahlschalter zum direkten Einstellen des Segelbetriebs aus einer beliebigen Stufe des Rekuperationsbetriebs verwendet.

In möglicher Ausgestaltung außerhalb des Schutzumfangs der Ansprüche befindet sich das Fahrzeug in einem Ausgangszustand in dem Segelbetrieb als Fahrbetrieb oder in einem motorischen Fahrbetrieb. Durch erstmaliges Bedienen der linken Taste bzw. des ersten Auswahlschalters wird ausgehend aus dem Segelbetrieb oder dem motorischen Fahrbetrieb eine erste, niedrigste Stufe für den Rekuperationsbetrieb eingestellt. Außerdem ist es möglich, die linke Taste und somit den ersten Auswahlschalter mindestens ein weiteres Mal zu bedienen und dabei eine zweite bzw. höhere Stufe für den Rekuperationsbetrieb nach einem erneuten Bedienen des ersten Auswahlschalters, eine dritte, ebenfalls höhere Stufe für den Rekuperationsbetrieb nach einem weiteren Bedienen des ersten Auswahlschalters usw. einzustellen, wobei eine jeweils vorgesehene Stufe für den Rekuperationsbetrieb durch Bedienen des ersten Auswahlschalters erhöht wird. Falls der erste Auswahlschalter ausgehend von dem Segelbetrieb oder motorischen Fahrbetrieb bspw. k-mal bedient wird, ist es möglich, eine k-te Stufe für den Rekuperationsbetrieb bzw. die Rekuperation einzustellen. Unabhängig davon, welche Stufe für den Rekuperationsbetrieb eingestellt ist, wird durch erstmaliges Bedienen des zweiten Auswahlschalters nach zumindest einmaligem Bedienen des ersten Auswahlschalters von einer jeweils eingestellten k-ten Stufe für den Rekuperationsbetrieb direkt und sofort der Segelbetrieb eingestellt.

Somit ist es möglich, unabhängig von der jeweils aktuell eingestellten Stufe für den Rekuperationsbetrieb den Segelbetrieb mit dem Bedienelement direkt zu aktivieren.

Eine mögliche Ausführungsform des Verfahrens ist bspw. bei einer Fahrt mit dem Fahrzeug durch eine Kurve durchführbar. Dabei ist vorgesehen, dass für das Fahrzeug noch vor Erreichen der Kurve zunächst durch Loslassen des Fahrpedals der Segelbetrieb eingestellt wird, wobei bereits durch einen Luft- und Rollwiderstand die Geschwindigkeit des Fahrzeugs reduziert wird. Durch mehrmaliges Bedienen des Bedienelements über den ersten Bedienschritt werden nacheinander unterschiedliche Stufen für den Rekuperationsbetrieb eingestellt, wobei eine Stärke für den Rekuperationsbetrieb stufenweise erhöht wird. So ist es möglich, für das Fahrzeug zuerst die niedrigste Stufe für den Rekuperationsbetrieb einzustellen und nach und nach höhere Stufen für den Rekuperationsbetrieb auszuwählen und einzustellen und dabei das Fahrzeug stufenweise zu verzögern. Dies erfolgt ohne Betätigung des Bremspedals und ohne hierbei gleich eine maximale Stufe für den Rekuperationsbetrieb einstellen zu müssen.

Eine derartige Vorgehensweise ist mit einem An- bzw. Abbremsen eines konventionellen Fahrzeugs vor der Kurve vergleichbar. Sofern sich das Fahrzeug bspw. in einem Scheitelpunkt der Kurve befindet, wobei für das Fahrzeug eine beliebige Stufe für den Rekuperationsbetrieb eingestellt ist, kann im Rahmen des Verfahrens aus der jeweils eingestellten Stufe des Rekuperationsbetriebs unmittelbar der Segelbetrieb eingestellt und für das Fahrzeug eine negative Beschleunigung, insbesondere eine negative Beschleunigung des Antriebsstrangs auf Null reduziert werden. Somit ist es möglich, durch Beenden der negativen Beschleunigung, die durch eine jeweilige Stufe des Rekuperationsbetriebs verursacht wird, und durch direktes Aktivieren des Segelbetriebs das Fahrzeug aus der Kurve heraus, durch die Trägheit einer Masse der Insassen, für die Insassen gefühlt zu beschleunigen. Durch ein derartiges Bedienen und Beeinflussen des Fahrbetriebs des Fahrzeugs ist es möglich, den Fahrspaß zu erhöhen und gleichzeitig die Effizienz des Fahrzeugbetriebs bzw. Fahrbetriebs zu steigern.

In Ausgestaltung des Verfahrens ist es somit möglich, eine jeweils eingestellte Stufe für den Rekuperationsbetrieb und somit den Rekuperationsbetrieb als Ersatz für eine Bremsung des Fahrzeugs zu nutzen, wobei das Fahrzeug in diesem Fall nicht durch Betätigen der Bremse sondern durch Umwandlung mechanischer Energie, insbesondere kinetischer Energie, aufgrund einer Bewegung des Fahrzeugs, in elektrische Energie durch die mindestens eine Elektromaschine zu verzögern und dabei durch die mindestens eine Elektromaschine Strom zu erzeugen ist. Bei dem Verfahren ist ein schnelles direktes Zurückschalten aus einer beliebigen Stufe für den Rekuperationsbetrieb in den Segelbetrieb möglich, wobei das Fahrzeug in einer jeweiligen Stufe des Rekuperationsbetriebs verzögert und im Segelbetrieb ausgehend von der jeweiligen Stufe des Rekuperationsbetriebs gefühlt beschleunigt wird. Dabei kann der Segelbetrieb bei Durchführung des Verfahrens aus einer beliebigen Stufe für den Rekuperationsbetrieb eingestellt werden. Somit ist das Aktivieren des Segelbetriebs nicht nur aus der maximalen oder minimalen Stufe für den Rekuperationsbetrieb möglich.

Vor der Fahrt in die Kurve wird das Fahrzeug durch stufenweises Erhöhen der Stärke des Rekuperationsbetriebs bzw. der Rekuperation aufgrund einer sukzessiven Erhöhung der Stufen für den Rekuperationsbetrieb ab- bzw. angebremst, so dass nicht gleich die maximale Stufe für den Rekuperationsbetrieb eingestellt werden muss. Dies ist mit einem Bedienen eines Bremspedals eines konventionellen Fahrzeugs mit Verbrennungsmotor vergleichbar, das zunächst nur geringfügig getreten wird, wobei ein Druck auf das Bremspedal bedarfsgerecht erhöht wird. Im Rahmen des Verfahrens ist im Anschluss, unabhängig davon welche Stufe für den Rekuperationsbetrieb aktuell eingestellt ist, ein unmittelbares Zurückschalten in den Segelbetrieb möglich, was bspw. einem Wechsel von dem Bremspedal eines konventionellen Fahrzeugs mit Verbrennungsmotor auf das Fahrpedal entspricht, wobei das Fahrzeug durch direktes Einstellen des Segelbetriebs aus der Kurve heraus gefühlt beschleunigt wird. Somit ist es nicht mehr erforderlich, den Rekuperationsbetrieb schrittweise bzw. stufenweise durch mehrmaliges Bedienen wieder zurückzunehmen, was zeitraubend und ineffizient ist.

Die Erfindung ist anhand von Ausführungsformen in den Zeichnungen schematisch dargestellt und wird unter Bezugnahme auf die Zeichnungen schematisch und ausführlich beschrieben.
Figur 1 zeigt in schematischer Darstellung eine Ausführungsform des erfindungsgemäßen Systems für ein Fahrzeug zur Durchführung einer Ausführungsform des erfindungsgemäßen Verfahrens.
Figur 2 zeigt in schematischer Darstellung eine erste, nicht erfindungsgemäße Variante eines Bedienelements der Ausführungsform eines Systems aus Figur 1.
Figur 3 zeigt in schematischer Darstellung eine zweite, erfindungsgemäße Variante eines

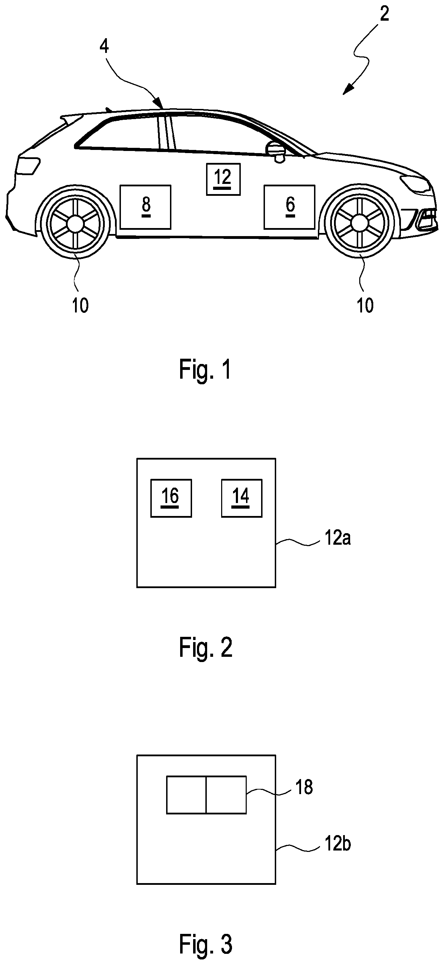

Bedienelements für die Ausführungsform des erfindungsgemäßen Systems aus Figur 1.

Die in Figur 1 schematisch dargestellte Ausführungsform des erfindungsgemäßen Systems 2 ist für ein hier als Kraftfahrzeug ausgebildetes und/oder zu bezeichnendes Fahrzeug 4 vorgesehen. Dabei weist das Fahrzeug 4 mindestens eine Elektromaschine 6, mindestens einen hier als Batterie ausgebildeten elektrischen Energiespeicher 8 und mehrere Räder 10 zum Fortbewegen des Fahrzeugs 4 auf.

Dabei sind für das Fahrzeug 4 mehrere Fahrbetriebe einstellbar und/oder durchführbar. Zum Antreiben des Fahrzeugs 4 wird elektrische Energie aus dem Energiespeicher 8 oder ggf. aus einer Energiequelle, bspw. einer Brennstoffzelle, falls das Fahrzeug 4 als Brennstoffzellenfahrzeug ausgebildet sein sollte, zu der mindestens einen Elektromaschine 6 übertragen, die in diesem Fall als Motor betrieben wird und die elektrische Energie in mechanische Energie umwandelt, durch die die Räder 10 gedreht werden und das Fahrzeug 4 angetrieben und somit fortbewegt wird, wobei für das Fahrzeug 4 ein motorisch angetriebener Fahrbetrieb durchgeführt wird.

Zum Bremsen des Fahrzeugs 4 ist weiterhin vorgesehen, die mindestens eine Elektromaschine 6 als Generator zu betreiben und dabei für das Fahrzeug 4 einen Rekuperationsbetrieb als bremsenden Fahrbetrieb einzustellen, wobei mechanische Energie, die sich durch die Bewegung des Fahrzeugs 4 ergibt, von der mindestens einen Elektromaschine 6 wieder in elektrische Energie umgewandelt und weiterhin zu dem mindestens einen elektrischen Energiespeicher 8 übertragen wird. Hierbei ist auch vorgesehen, dass für den Rekuperationsbetrieb unterschiedliche Stufen und somit unterschiedliche Stärken einstellbar sind.

Bei Durchführung der Ausführungsform des Verfahrens wird ein Bedienelement 12 des Fahrzeugs 4 verwendet. In Ausgestaltung ist hierbei eine erste, nicht erfindungsgemäße Variante des Bedienelements 12a, wie sie in Figur 2 schematisch dargestellt ist, oder eine zweite, erfindungsgemäße Variante des Bedienelements 12b, wie sie in Figur 3 schematisch dargestellt ist, verwendbar. Dabei weist die erste, nicht erfindungsgemäße Variante 12a einen ersten Auswahlschalter 14 und einen zweiten Auswahlschalter 16 auf. Die zweite, erfindungsgemäße Variante des Bedienelements 12b weist lediglich einen Auswahlschalter 18 auf. Somit weist jede Variante des Bedienelements 12, 12a bzw. 12b mindestens einen Auswahlschalter 14, 16, 18 auf.

Weiterhin ist mit dem mindestens einen Auswahlschalter 14, 16, 18 mindestens ein erster Bedienschritt und/oder mindestens ein zweiter Bedienschritt zum Betätigen des Bedienelements 12, 12a bzw. 12b durchführbar. Dabei ist vorgesehen, dass für den Rekuperationsbetrieb des Fahrzeugs 4 mehrere, bspw. n Stufen für den Rekuperationsbetrieb möglich sind, wobei n ≥ 2 ist. Hierbei ist durch einmaliges Durchführen des ersten Bedienschritts eine Stufe des Rekuperationsbetriebs zu erhöhen. Falls sich das Fahrzeug 4 ursprünglich in einem angetriebenen, motorischen Fahrbetrieb oder im Segelbetrieb befindet, wird durch erstmaliges Durchführen des ersten Bedienschritts die erste, niedrigste Stufe des Rekuperationsbetriebs durchgeführt. Durch erneute Durchführung des ersten Bedienschritts wird eine Stufe des Rekuperationsbetriebs entsprechend erhöht. Falls im Rahmen des Verfahrens der zweite Bedienschritt durchgeführt wird, wird unabhängig davon, welche Stufe für den Rekuperationsbetrieb augenblicklich eingestellt sein sollte, sofort und/oder direkt der Segelbetrieb eingestellt.

Falls das Verfahren mit der ersten, nicht erfindungdgemäßen Variante des Bedienelements 12a durchgeführt wird, wird der erste Bedienschritt durch Bedienen und/oder Betätigen des ersten Auswahlschalters 14 durchgeführt. Dagegen wird der zweite Bedienschritt durch Bedienen des zweiten Auswahlschalters 16 durchgeführt.

Nachdem das Verfahren mit der zweiten, erfindungsgemäßen Variante des Bedienelements 12b durchgeführt wird, das lediglich einen Auswahlschalter 18 aufweist, wird durch Betätigen und/oder Bedienen dieses einen Auswahlschalters 18 unter Durchführung einer ersten Bewegung in eine erste Richtung der erste Bedienschritt durchgeführt, wohingegen durch Betätigen und/oder Bedienen des einen Auswahlschalters 18 unter Durchführung einer zweiten zu der ersten Bewegung unterschiedlichen Bewegung in eine zweite Richtung der zweite Bedienschritt durchgeführt wird. Dabei ist es möglich, dass die erste Bewegung bzw. erste Richtung und die zweite Bewegung bzw. Richtung entgegengesetzt orientiert sind.

Unabhängig davon, mit welcher Variante des Bedienelements 12, 12a, 12b das Verfahren durchgeführt und somit ein jeweiliger Fahrbetrieb des Fahrzeugs 4 eingestellt wird, wird durch Durchführen des ersten Bedienschritts eine Stufe des Rekuperationsbetriebs üblicherweise schrittweise erhöht, wohingegen durch einmaliges Durchführen des zweiten Bedienschritts aus einer beliebig aktuell eingestellten Stufe des Rekuperationsbetriebs direkt der Segelbetrieb eingestellt wird. Somit ergibt sich für einen Insassen des Fahrzeugs 4 aufgrund einer Trägheit seiner Masse, dass das durch den Rekuperationsbetrieb verzögerte Fahrzeug durch direktes Umschalten in den Segelbetrieb für ihn gefühlt beschleunigt wird.

### BEZUGSZIFFERN:

System 2
Fahrzeug 4
Elektromaschine 6
Energiespeicher 8
Rad 10
Bedienelement 12, 12a, 12b
Auswahlschalter 14, 16, 18

## Patentansprüche

1. Verfahren zum Einstellen eines Fahrbetriebs eines Fahrzeugs (4), das mit mindestens einer Elektromaschine (6) angetrieben wird, wobei für den Fahrbetrieb mehrere Stufen eines Rekuperationsbetriebs und ein Segelbetrieb vorgesehen werden, wobei mit einem Bedienelement (12, 12b) ein erster Bedienschritt oder ein zweiter Bedienschritt durchgeführt wird, wobei bei jeweils einmaligem Durchführen des ersten Bedienschritts mit dem Bedienelement (12, 12b) eine Stufe des Rekuperationsbetriebs erhöht wird, wobei durch mehrmaliges Durchführen des ersten Bedienschritts mit dem Bedienelement (12, 12b) eine höhere Stufe des Rekuperationsbetriebs eingestellt wird, die höher als eine niedrigste Stufe des Rekuperationsbetriebs ist, **dadurch gekennzeichnet, dass** bei Durchführen des zweiten Bedienschritts mit dem Bedienelement (12, 12b) ausgehend von der eingestellten höheren Stufe des Rekuperationsbetriebs der Segelbetrieb direkt eingestellt wird, wobei das Bedienelement (12b) nur einen Auswahlschalter (18) aufweist, mit dem eine mit dem ersten Bedienschritt verbundene erste Bewegung und eine mit dem zweiten Bedienschritt verbundene zweite Bewegung durchgeführt wird, wobei unter mehrmaliger Durchführung der ersten Bewegung die höhere Stufe für den Rekuperationsbetrieb ausgewählt und eingestellt wird, und wobei unter lediglich einmaliger Durchführung der zweiten Bewegung der Segelbetrieb ausgewählt und eingestellt wird.

2. System zum Einstellen eines Fahrbetriebs eines Fahrzeugs (4), das mit mindestens einer Elektromaschine (6) angetrieben wird, wobei für den Fahrbetrieb mehrere Stufen eines Rekuperationsbetriebs und ein Segelbetrieb vorgesehen sind, wobei das System (2) ein Bedienelement (12, 12b) zum Durchführen eines ersten Bedienschritts und eines zweiten Bedienschritts aufweist, wobei bei jeweils einmaligem Durchführen des ersten Bedienschritts mit dem Bedienelement (12, 12b) eine Stufe des Rekuperationsbetriebs erhöht wird, wobei durch mehrmaliges Durchführen des ersten Bedienschritts mit dem Bedienelement (12, 12b) eine höhere Stufe des Rekuperationsbetriebs eingestellt wird, die höher als eine niedrigste Stufe des Rekuperationsbetriebs ist, **dadurch gekennzeichnet, dass** bei Durchführen des zweiten Bedienschritts mit dem Bedienelement (12, 12b) ausgehend von der eingestellten höheren Stufe des Rekuperationsbetriebs der Segelbetrieb direkt eingestellt wird, wobei das Bedienelement (12b) nur einen Auswahlschalter (18) aufweist, mit dem eine mit dem ersten Bedienschritt verbundene erste Bewegung und eine mit dem zweiten Bedienschritt verbundene zweite Bewegung durchführbar ist, wobei unter mehrmaliger Durchführung der ersten Bewegung die Stufe für den Rekuperationsbetrieb auswählbar und einstellbar ist, und wobei unter lediglich einmaliger Durchführung der zweiten Bewegung der Segelbetrieb auswählbar und einstellbar ist.

3. System nach Anspruch 2, bei dem die beiden Bewegungen einander entgegengesetzt sind.

4. System nach Anspruch 2 oder 3, bei dem ein Auswahlschalter (18) als Schiebeknopf ausgebildet ist.

## Claims

1. Method for adjusting a driving mode of a motor vehicle (4) which is driven by at least one electric engine (6), wherein several stages of a recuperation mode and a coasting mode are provided for the driving mode, wherein a first operating stage or a second operating stage is carried out with an operating element (12, 12b), wherein a stage of the recuperation mode is raised when the first operating stage is carried out respectively once using the operating element (12, 12b), wherein a higher stage of the recuperation mode, which is higher than a lowest stage of the recuperation mode, is set by carrying out several times the first operating stage using the operating element (12, 12b), **characterized in that**, when the second operating stage is carried out using the operating element (12, 12b) starting from the set higher stage of the recuperation mode, the coasting mode is directly set, wherein the operating element (12b) has only one selection switch (18), with which a first movement, connected to the first operating stage, and a second movement, connected with the second operating stage, are carried out, wherein the higher stage for the recuperation mode is selected and set when the first movement is carried out several times, and wherein the coasting mode is selected and set when the second movement is carried out only once.

2. System for adjusting a driving mode of a motor vehicle (4) which is driven by at least one electric engine (6), wherein several stages of a recuperation mode and a coasting mode are provided for the driving mode, wherein the system (2) has an operating element (12, 12b) for carrying out a first operating stage and a second operating stage, wherein a stage of the recuperation mode is raised by carrying out once the first operating stage using the operating element (12, 12b), wherein a higher stage of the recuperation mode, which is higher than a lowest stage of the recuperation mode, is set by carrying out several times the first operating stage using the operating element (12, 12b), **characterized in that**, when the second operating stage is carried out using the operating element (12, 12b) starting from the set higher stage of the recuperation mode, the coasting mode is directly set, wherein the operating element (12b) has only one selection switch (18), with which a first movement, connected to the first operating stage, and a second movement, connected to the second operating stage, can be carried out, wherein the stage for the recuperation mode can be selected and set when the first movement is carried out several times, and wherein the coasting mode can be selected and set when the second movement is carried out only once.

3. System according to claim 2, in which the two movements are counter to one another.

4. System according to claim 2 or 3, in which a selection switch (18) is in the form of a slider button.

## Revendications

1. Procédé de réglage d'un mode de conduite d'un véhicule (4) qui est entraîné par au moins une machine électrique (6), dans lequel plusieurs niveaux d'un mode de récupération et un mode roue libre sont prévus pour le mode de conduite, dans lequel une première étape de commande ou une seconde étape de commande est effectuée avec un élément de commande (12, 12b), dans lequel un niveau du mode de récupération est augmenté respectivement lorsque la première étape de commande est effectuée une fois avec l'élément de commande (12, 12b), dans lequel un niveau plus élevé du mode de récupération est réglé en effectuant plusieurs fois la première étape de commande avec l'élément de commande (12, 12b), qui est plus élevé qu'un niveau le plus bas du mode de récupération, **caractérisé en ce que**, lorsque la deuxième étape de commande est effectuée avec l'élément de commande (12, 12b), le mode roue libre est réglé directement à partir du niveau supérieur réglé du mode de récupération, dans lequel l'élément de commande (12b) présente un seul commutateur de sélection (18) avec lequel un premier mouvement lié à la première étape de commande et un second mouvement lié à la seconde étape de commande sont effectués, dans lequel le niveau supérieur pour le mode de récupération est sélectionné et réglé en effectuant plusieurs fois le premier mouvement, et dans lequel le mode roue libre est sélectionné et réglé en effectuant une seule fois le second mouvement.

2. Système pour le réglage d'un mode de conduite d'un véhicule (4) qui est entraîné par au moins une machine électrique (6), dans lequel plusieurs niveaux d'un mode de récupération et un mode roue libre sont prévus pour le mode de conduite, dans lequel le système (2) présente un élément de commande (12, 12b) pour effectuer une première étape de commande et une seconde étape de commande, dans lequel un niveau du mode de récupération est augmenté respectivement lorsque la première étape de commande est effectuée une fois avec l'élément de commande (12, 12b), dans lequel un niveau plus élevé du mode de récupération est réglé en effectuant plusieurs fois la première étape de commande avec l'élément de commande (12, 12b), qui est plus élevé qu'un niveau le plus bas du mode de récupération, **caractérisé en ce que**, lorsque la deuxième étape de commande est effectuée avec l'élément de commande (12, 12b), le mode roue libre est réglé directement à partir du niveau supérieur réglé du mode de récupération, dans lequel l'élément de commande (12b) présente un seul commutateur de sélection (18) avec lequel un premier mouvement lié à la première étape de commande et un second mouvement lié à la seconde étape de commande peuvent être effectués, dans lequel le niveau pour le mode de récupération peut être sélectionné et réglé en effectuant plusieurs fois le premier mouvement, et dans lequel le mode roue libre peut être sélectionné et réglé en effectuant une seule fois le second mouvement.

3. Système selon la revendication 2, dans lequel les deux mouvements sont opposés.

4. Système selon la revendication 2 ou 3, dans lequel un commutateur de sélection (18) est formé en tant que bouton coulissant.
